# EUROPEAN PATENT APPLICATION

(11) **EP 4 104 913 A1**
(43) Date of publication of application: **21.12.2022**
(21) Application number: 21180315.0
(22) Date of filing: 18.06.2021
(51) Int. Cl.: B01D 11/04, C07C 51/44, C07C 51/48

(54) **METHOD FOR PURIFYING AN EXTRACTION LIQUID**

(71) Applicant: LENZING AKTIENGESELLSCHAFT, 4860 Lenzing (AT)
(72) Inventor: Almhofer, Lukas, 4650 Edt bei Lambach (AT); Bischof, Robert, 1080 Wien (AT); Madera, Martin, 1030 Wien (AT); Schlackl, Klaus, 4730 Waizenkirchen (AT)
(74) Representative: Global Patent Management Lenzing AG

(57) **Abstract**

This invention relates to a method for the purification of a depleted organic extraction liquid from a production process, said method comprising the following steps in the given sequence: a. intensive mixing the depleted organic extraction liquid with an amine-containing liquid in a first liquid-liquid extraction step, b. phase separation of the two liquids of step a., c. washing of the organic extraction liquid phase of step b. with an aqueous liquid in a second liquid-liquid extraction step, d. phase separation of the two liquids of step c., and e. recycling of the purified organic extraction liquid into the production process, wherein the enriched amine-containing phase of step b. and the enriched aqueous phase of step d. are purified and recycled into steps a. resp. step c..

## Description

This invention relates to a method for the purification of a depleted organic extraction liquid from a production process, said method comprising the following steps in the given sequence: a. intensive mixing the depleted organic extraction liquid with an amine-containing liquid in a first liquid-liquid extraction step, b. phase separation of the two liquids of step a., c. washing of the organic extraction liquid phase of step b. with an aqueous liquid in a second liquid-liquid extraction step, d. phase separation of the two liquids of step c., and e. recycling of the purified organic extraction liquid into the production process, wherein the enriched amine-containing phase of step b. and the enriched aqueous phase of step d. are purified and recycled into steps a. resp. step c..

### Prior Art

Extraction is a well-known separation operation for many applications, in particular in the chemical process engineering, pharmaceutical industry etc.. Commonly used devices for extraction are among others batch wise single stage extractions and multistage countercurrent continuous processes, e.g. continuous batteries of mixer-settlers, packed columns, stirred columns or centrifugal extractors.

EP 36406 A1 discloses a method for extracting solutes like acetic acid, formic acid, optionally furfural and the like from an aqueous solution of hydrolysis products of biomasses, e.g. from the hydrolysis of comminuted wood in a pulp cooking process. Such aqueous solutions may be the condensates of waste liquors formed during the cooking process. The acetic acid, furfural and the like may be interesting by-products of the pulp production in a biorefinery. The extraction according to EP 36406 A1 uses as a solvent a mixture of Trioctylphosphine oxide (preferably between 30 and 40 weight-%) and n-Undecan (preferably between 60 and 70 weight-%). According to EP 36406 A1 after removing of the solutes (e.g. by stripping) the depleted extraction solvent can be re-used in the extraction without further purification.

However, it was found that during the commercial-scale operation of such a process, the depleted extraction solvent still contains some residues, in particular lipophilic compounds with low vapor pressure, like long-chain fatty acids, resin acids, sterols, lignans, etc.) and condensation products of furan derivatives, so called humins, which would be accumulated during repeated recycling cycles. Due to the long residence time, they may form solid particles that can cause significant fouling in the pipes, heat exchangers and other parts of the plant. This requires frequent cleaning or exchange of such parts and causes high operating costs.

The presence of these unwanted residues furthermore reduces the capacity of the extraction solvent for the valuable compounds, i.e. acetic acid and furfural. Additionally, the residues remaining in the cycles would have to be heated up together with the extraction solvent and therefore consume additional energy, without contributing to the extraction itself. Both effects reduce the efficiency of the whole process.

A further disadvantage of these unwanted residues is that they may act similar to surfactants and thereby may have a negative effect on the phase separation. In a worst case, they may lead to the formation of emulsions, making phase separation impossible.

Therefore, it appeared to be necessary to remove these lipophilic compounds continuously, before they accumulate and cause the aforementioned problems. Mechanical separation methods like filtration or centrifugation are not applicable as they work only for solid impurities. One possible approach is called "overliming" and applies lime milk or magnesium hydroxide to the depleted extraction solvent, to remove acidic compounds *in situ* by precipitation. However, this creates significant amounts of solid waste inside the plant, which aggravates the fouling, only partly consists of the unwanted residues, but contains much lime or magnesium hydroxide that could better be used otherwise, instead. Alternatively, active carbon may be used to adsorb the unwanted residues. However this creates significant amounts of solid waste, as well, and furthermore consumes a significant amount of the extraction solvent. Extraction with aqueous inorganic alkali (like sodium hydroxide or potassium hydroxide) does not work well, due to unfavorable distribution ratios and poor solubility of the resulting fatty acid salts. Furthermore stable emulsions are formed, which are hard to break.

### Problem

In view of this prior art the problem to be solved consisted in preventing fouling of extraction process equipment caused by residues in the depleted extraction solvent, and in particular in removing the unwanted residues from the depleted extraction solvent and the extraction plant itself in an economic way without creating too much waste material in order to keep cost for disposal as low as possible. A further problem to be solved consisted in improving the economy of the process.

### Description

It is an object of the present invention to provide a method for the purification of a depleted organic extraction liquid 1 coming from a production process, said method comprising the following steps in the given sequence:
a) Intensively mixing the depleted organic extraction liquid 1 with an amine-containing liquid 9 in a first liquid-liquid extraction step 2,
b) Phase separation of the two liquids of step a., thereby forming an enriched amine-containing phase 5 and an organic extraction liquid phase,
c) Washing of the organic extraction liquid phase of step b in order to recover the amine with an aqueous liquid in a second liquid-liquid extraction step 3,
d) Phase separation of the two liquids of step c., thereby forming an enriched aqueous phase 6 and a purified organic extraction liquid 4
e) Recycling of the purified organic extraction liquid 4 into the production process,
wherein the enriched amine-containing phase 5 of step b. and the enriched aqueous phase 6 of step d. are purified and recycled into steps a. resp. step c..

The amine-containing liquid favourably is not miscible with the organic extraction liquid. The aqueous liquid may be either recovered water from a distillation or fresh water. In a preferred embodiment of the invention it may be an aqueous phase coming from an evaporation plant as the vapour condensate and contains a small amount of acetic acid, i.e. being slightly acidic. The acidic pH may improve the extraction of the amine.

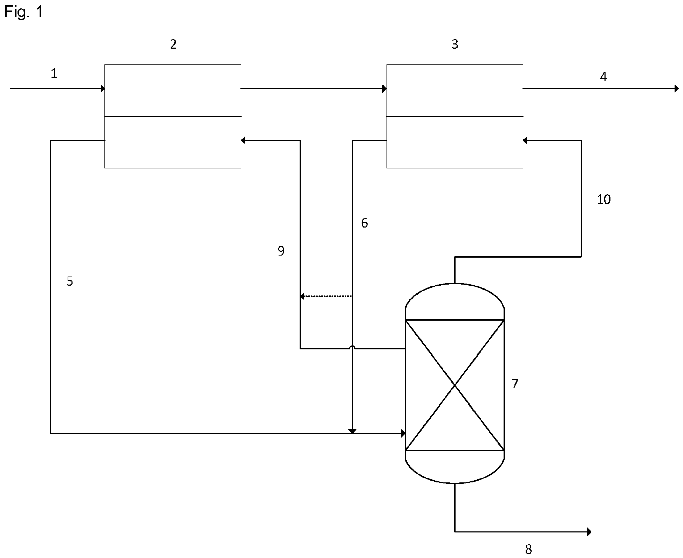

According to a preferred embodiment of the invention, as shown in Fig. 1, the purification of the enriched amine-containing phase 5 of step b. and the enriched aqueous phase 6 of step d. is done by combining both phases and subjecting them to a fractionated distillation 7 and the residue 8 of the fractionated distillation is removed separately. Some amine may get lost during operation of the process of the invention and has to be replaced by fresh amine. The fresh amine can be introduced at a suitable location within the process; one possible location is an inlet into the pipeline of stream 9.

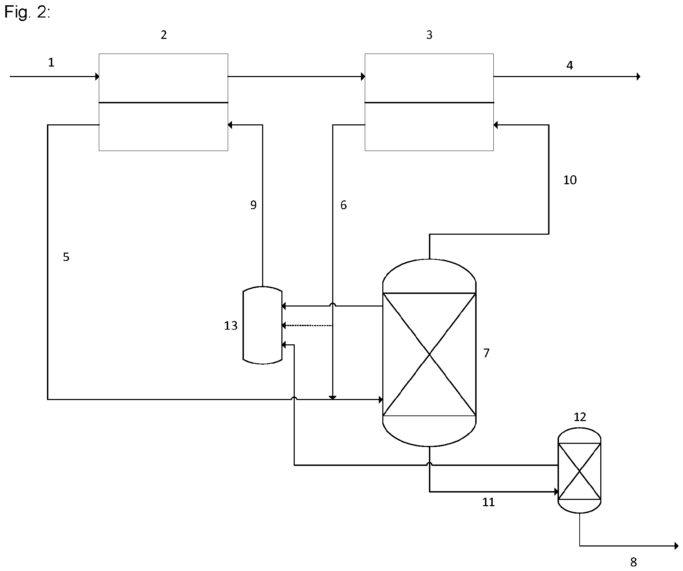

According to a preferred embodiment of the invention, as shown in Fig. 2, the fractionated distillation is a 2-stage distillation consisting of a conventional distillation column 7 for the first stage and an evaporator 12 for the second stage, wherein the sump 11 of the first stage is further distilled in order to increase the amine recovery rate. In principle it is also possible to use an evaporator in the first stage and a distillation column in the second stage. However in that embodiment there may be higher efforts needed for cleaning the devices as the evaporator has to be operated at higher temperatures than the distillation column and therefore more residues will occur there. In the first stage the evaporator has to be bigger than in the second stage, hence needs more cleaning efforts.

The distillation 7 in the first stage is controlled in a way to recover as much amine as possible, but to prevent the residues from coagulation and depositing in the first distillation column 7. The concentrated sump 11 is forwarded to a second distillation stage consisting of a kind of evaporator 12 that is designed to process high-viscosity media and that is easier to clean, i.e. to remove the coagulated residues. For this purpose among others, a thin film evaporator is suitable. The separated residues 8 finally are disposed of, e.g. by incineration.

According to another preferred embodiment of the invention the distillation is a 1-stage distillation consisting of a conventional distillation column. The sump of the distillation stage is removed, the residues in the sump are coagulated by adding an acid and subsequently separated mechanically and the remaining liquid is deprotonated, in particular by adding calcium hydroxide, and recycled into the extraction process. Preferably, the acid is sulfuric acid. The calcium sulfate formed during neutralization can be separated mechanically, e.g. by filtration, centrifugation or other suitable operations. Alternatively, this whole distillation step may be replaced by simply coagulating the residues by an acid, however this would require more acid, sufficient to neutralize the whole quantity of amine, as well as more calcium hydroxide for deprotonation. The separated residues finally are disposed of, e.g. by incineration.

According to yet another preferred embodiment of the invention the distillation is a 1-stage distillation consisting of a conventional distillation column and the sump of the distillation stage is treated with salts of earth alkali metals (oxides, hydroxides, chlorides, etc.) to precipitate fatty acids and humin particles. The precipitate may be removed separately, e.g. by filtration, flotation or the like.

According to a preferred embodiment of the invention the amine-containing liquid contains one or more alkanolamines of the group containing 2-(Dimethylamino)ethan-1-ol (DMAE) and N-Methyldiethanolamine.

Preferably the liquid-liquid extraction steps of step a. (2) and/or step c. (3) are continuous extraction steps. Batch extraction steps are in principle possible as well. However, in a commercial scale plant, continuous extraction is generally preferred. Typical devices for such continuous extraction are packed columns, rotating disc contactors, mixer-settler arrangements, etc..

Preferably the steps a. to e., and, as the case may be, all steps in between, are performed at a temperature of between 50 and 100°C, more preferably between 55 and 90°C.

In the method according to the invention the production process may be a process for obtaining by-products from a biomaterial. Preferably, the biomaterial is wood. The by-products may be acetic acid, furfural and/or other by-products obtainable from a wood pulp manufacturing process, for example in a so-called "biorefinery". However, the invention may be applicable also for other production processes wherein biomasses and hydrophobic solvents with low vapor pressure occur, such as, but not limited to reactive extractions with trioctylamine, deep eutectic solvents or recycling of ionic liquids, e.g. in the manufacture of man-made cellulosic fibers.

According to a preferred embodiment of the invention, the production process contains a vapor condensate extraction stage and the organic extraction liquid was used to extract the by-products acetic acid and furfural from the vapor condensate and was subjected to a stripping step to deplete the by-products before being subjected to the purification method according to the invention.

According to a preferred embodiment of the invention, only a part of the organic extraction liquid coming from the vapour condensate extraction stage is purified according to the invention. The quantity of this partial flow may depend on the content of impurities in the organic extraction liquid and may be smaller if less impurities are contained in the liquid. It may be between 0.1 and 100% (weight/weight) of the total organic extraction liquid coming from the vapour condensate extraction stage. In case of a smaller content of impurities the partial flow may be only between 0.1 and 50% (weight/weight), preferably between 0.1 and 20% (weight/weight) or even more preferred between 0.1 and 5% (weight/weight) in case of a very small impurity content.

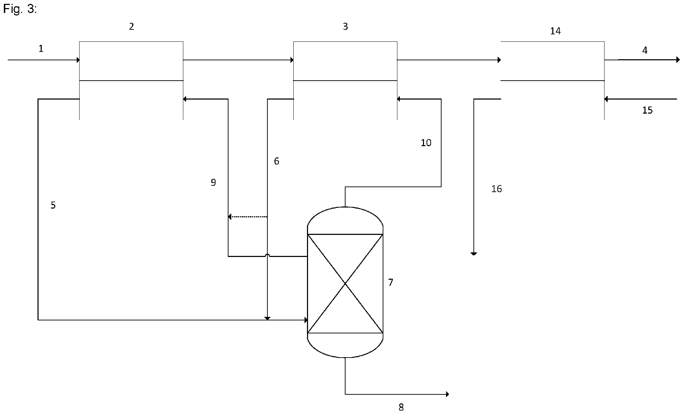

According to another preferred embodiment of the invention, shown in Fig. 3, between step d. and step e. a second washing of the organic extraction liquid phase of step d. with an aqueous liquid 15 in a third liquid-liquid extraction step 14 and subsequently a phase separation of the two liquids of this second washing step are performed. The aqueous liquid 15 may be either recovered water from a distillation or fresh water. In a particularly preferred embodiment of the invention, the aqueous liquid 15 may be an aqueous phase coming from an evaporation plant as the vapour condensate and contains a small amount of acetic acid, i.e. being slightly acidic. The acidic pH may improve the extraction of the amine. The enriched aqueous phase 16 of this second washing step may be either combined with the enriched aqueous phase 6 of step d. before distillation 7 or forwarded to a wastewater treatment plant with a treatment stage able to remove the amine.

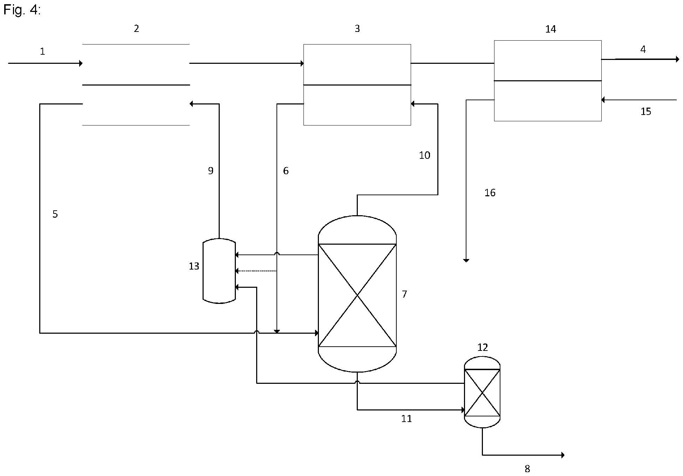

According to yet another preferred embodiment of the invention, shown in Fig. 4, the features of the two embodiments shown in Fig. 2 and in Fig. 3 are combined. Between step d. and step e. a second washing of the organic extraction liquid phase of step d. with an aqueous liquid 15 in a third liquid-liquid extraction step 14 and subsequently a phase separation of the two liquids of this second washing step are performed. The aqueous liquid 16 may be either recovered water from a distillation or fresh water. In a particularly preferred embodiment of the invention the aqueous liquid 15 may be an aqueous phase coming from an evaporation plant as the vapour condensate and contains a small amount of acetic acid, i.e. being slightly acidic. The acidic pH may improve the extraction of the amine. The enriched aqueous phase 16 of this second washing step may be either combined with the enriched aqueous phase 6 of step d. before distillation 7 or forwarded to a wastewater treatment plant with a treatment stage able to remove the amine. Furthermore, in this preferred embodiment the fractionated distillation is a 2-stage distillation consisting of a conventional distillation column 7 for the first stage and an evaporator 12 for the second stage, wherein the sump 11 of the first stage is further distilled in order to increase the amine recovery rate. In this embodiment another possible location for the introduction of fresh amine is the container 13.

In the figures the reference numbers have the following meaning:
1 depleted organic extraction liquid coming from a production process
2 first liquid-liquid extraction step, including phase separation
3 second liquid-liquid extraction step, including phase separation
4 purified organic extraction liquid going back into the production process
5 enriched amine-containing phase of step b.
6 enriched aqueous phase of step d.
7 fractionated distillation
8 residue (sump) of the distillation, going to disposal
9 recovered aqueous amine solution, coming from recovery unit (distillation + evaporation)
10 depleted aqueous liquid, coming from distillation 7
11 sump coming from the distillation stage 7
12 evaporator for the second recovery stage
13 container for purified amine coming from second distillation stage 12
14 third liquid-liquid extraction step, including phase separation
15 aqueous liquid, going to the third liquid-liquid extraction step 15
16 enriched aqueous liquid phase of third liquid-liquid extraction step 15

The invention will now be illustrated by examples. These examples are not limiting the scope of the invention in any way. The invention includes also any other embodiments which are based on the same inventive concept.

### Examples

### Example 1: Removal of palmitic acid from a depleted organic extraction liquid

a) A depleted organic extraction liquid obtained from a commercial biorefinery containing 52.6%w/w undecane and 32.4%w/w trioctylphosphine oxide was analyzed for palmitic acid (by GC) and solid particles (by gravimetry) and found to contain 22.2 g L⁻¹ palmitic acid and 0.49%w/w solid particles. The liquid further contains other extractives, water, acetic acid and other residues. A zeta potential of - 44.0 mV for the solid particles was determined using electrophoretic light scattering (20 °C, 1 mg mL⁻¹ in H₂O).
b) 100 mL of this liquid were stirred with 100 mL of an aqueous solution of 175 g L⁻¹ 2-(dimethylamino)ethan-1-ol (Aldrich, 99.5%) at 60 °C and 200 rpm in a double walled glass apparatus. After 15 minutes, the stirring was stopped and the phases were allowed to separate. 5 mL samples were withdrawn from each phase and the process was repeated 4 times with the same organic liquid and an equal quantity of fresh aqueous amine solution. In all extraction steps, it was observed that some of the aqueous phase was emulsified in the organic phase. The samples from the organic phases after each extraction step were analyzed for palmitic acid and 2-(dimethylamino)ethan-1-ol (by CE) and the following results were found (Table 1.a). In the 5^{th} step the amine content again decreased due to forming of an emulsion.

**Table 1.a:**

| | Feed | 1^{st} step | 2^{nd} step | 3^{rd} step | 4^{th} step | 5^{th} step |
|---|---|---|---|---|---|---|
| palmitic acid | 22.2 | 7.9 | 4.7 | 3.5 | 3.3 | 2.5 |
| [g L⁻¹] | | | | | | |
| distribution coefficient K = 3,61 | | | | | | |
| 2-(dimethylamino)ethan-1-ol | 0 | 35.0 | 40.0 | 49.5 | 58.0 | 44.0 |
| [g L⁻¹] | | | | | | |
| distribution coefficient K = 0,28 | | | | | | |

c) Higher amine concentration: 100 mL of the depleted organic extraction liquid as in a) above were stirred with 100 mL of an aqueous solution of 360 g L⁻¹ 2-(dimethylamino)ethan-1-ol at 60 °C and 200 rpm in a double walled glass apparatus. After 15 minutes, the stirring was stopped and the phases were allowed to separate. 5 mL samples were withdrawn from each phase and the process was repeated 4 times with the same organic liquid and an equal quantity of fresh aqueous amine solution. No formation of emulsions was observed. The samples from the organic phases after each extraction step were analyzed for particles, palmitic acid and 2-(dimethylamino)ethan-1-ol and the following results were found (Table 1.b).

**Table 1.b:**

| | Feed | 1^{st} step | 2^{nd} step | 3^{rd} step | 4^{th} step | 5^{th} step |
|---|---|---|---|---|---|---|
| palmitic acid | 22.2 | 3.8 | 2.0 | 1.0 | 0.5 | 0.20 |
| [g L⁻¹] | | | | | | |
| distribution coefficient K = 0,71 | | | | | | |
| particles | 0.49 | 0.01 | 0 | 0 | 0 | 0 |
| [%w/w] | | | | | | |
| 2-(dimethylamino)ethan-1-ol | 0 | 36.0 | 38.5 | 38.0 | 39.5 | 37.0 |
| [g L⁻¹] | | | | | | |
| distribution coefficient K = 0,12 | | | | | | |

d) Higher temperature: 100 mL of the depleted organic extraction liquid of a) above were stirred with 100mL of an aqueous solution of 360 g L⁻¹ 2-(dimethylamino)ethan-1-ol at 80 °C and 200 rpm in a double walled glass apparatus. After 15 minutes the stirring was stopped and the phases were allowed to separate. 5 mL samples were withdrawn from each phase and the process was repeated 4 times with the same organic liquid and an equal quantity of fresh aqueous amine solution. No formation of emulsions was observed. The samples from the organic phases after each extraction step were analyzed for palmitic acid and 2-(dimethylamino)ethan-1-ol and the following results were found (Table 1.c).

**Table 1.c:**

| | Feed | 1^{st} step | 2^{nd} step | 3^{rd} step | 4^{th} step | 5^{th} step |
|---|---|---|---|---|---|---|
| palmitic acid | 20.8 | 4.9 | 2.5 | 1.2 | 0.6 | 0.4 |
| [g L⁻¹] | | | | | | |
| distribution coefficient K = 0,60 | | | | | | |
| 2-(dimethylamino)ethan-1-ol | 0 | 36.7 | 42.4 | 43.3 | 44.3 | 44.7 |
| [g L⁻¹] | | | | | | |
| distribution coefficient K = 0,12 | | | | | | |

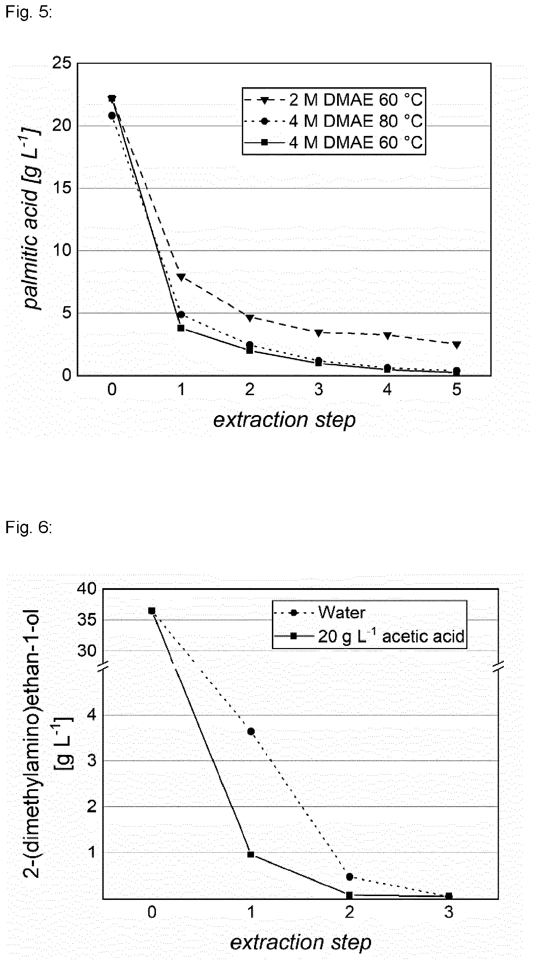

Example 1 demonstrates (see also Fig. 5) that increasing the amine concentration and/or increasing the temperature may improve the removal of the unwanted residues like palmitic acid from a depleted organic liquid as e.g. coming from a vapor condensate extraction.

### Example 2: Removal of the amine from the purified organic extraction liquid

a) 150 mL of the depleted organic extraction solvent described in example 1 was mixed with 150 mL of an aqueous solution of 357 g L⁻¹ 2-(dimethylamino)ethan-1-01 at 60 °C and 200 rpm in a double walled glass apparatus. After 15 minutes the stirring was stopped and the phases were allowed to separate. 5 mL sample were withdrawn from the organic phase and analyzed for 2-(dimethylamino)ethan-1-ol.
b) 51 g of the extracted organic phase obtained in step a) was stirred with an equal mass of demineralized water at 60 °C and 200 rpm in a double walled glass apparatus. After 15 minutes the stirring was stopped and the phases were allowed to separate. 5 mL samples were withdrawn from each phase and the process was repeated two times with the same organic liquid and an equal quantity of fresh demineralized water. The samples from the organic phases after each extraction step were analyzed for 2-(dimethylamino)ethan-1-ol and the following results were found (Table 2.a).

**Table 2.a:**

| | Feed | 1^{st} step | 2^{nd} step | 3^{rd} step |
|---|---|---|---|---|
| 2-(dimethylamino)ethan-1-ol | 36.50 | 3.64 | 0.48 | 0.04 |
| [g L⁻¹] | | | | |
| distribution coefficient K = 0,10 | | | | |

c) 57 g of the extracted organic phase obtained in step a) was mixed with an equal mass of an aqueous solution of 20 g L⁻¹ acetic acid at 60 °C and 200 rpm in a double walled glass apparatus. After 15 minutes the stirring was stopped and the phases were allowed to separate. 5 mL samples were withdrawn from each phase and the process was repeated two times with the same organic liquid and an equal quantity of fresh aqueous solution of 20 g L⁻¹ acetic acid. The samples from the organic phases after each extraction step were analyzed for 2-(dimethylamino)ethan-1-01 and the following results were found (Table 2.b).

**Table 2.b:**

| | Feed | 1^{st} step | 2^{nd} step | 3^{rd} step |
|---|---|---|---|---|
| 2-(dimethylamino)ethan-1-ol | 36.50 | 0.96 | 0.08 | 0.05 |
| [g L⁻¹] | | | | |
| distribution coefficient K = 0,05 | | | | |

Example 2 demonstrates (see also Fig. 6) that a slightly acidic washing water may improve the amine removal.

### Example 3: Purification of a depleted organic extraction liquid

a) A depleted organic extraction liquid obtained from a commercial biorefinery consisting of 52.6%w/w undecane and 32.4%w/w trioctylphosphine oxide was analyzed for solid particles (by gravimetry) and wood extractives (by GC) and found to contain 0.49%w/w solid particles and 52.6 g L⁻¹ wood extractives.
b) 100 mL of this liquid were stirred with 100 mL of an aqueous solution of 351 g L⁻¹ 2-(dimethylamino)ethan-1-ol at 60 °C and 200 rpm in a double walled glass apparatus. After 15 minutes the stirring was stopped and the phases were allowed to separate. The aqueous phase was discarded and the process was repeated 4 times with the same organic liquid and an equal quantity of fresh aqueous amine solution.
c) To remove the amine from the purified organic phase resulting from b) above it was stirred with an equal mass of demineralized water at 60 °C and 200 rpm in a double walled glass apparatus. After 15 minutes the stirring was stopped and the phases were allowed to separate. The aqueous phase was discharged and the process was repeated 2 times with the same organic liquid and an equal quantity of fresh demineralized water. The obtained washed organic extraction liquid was analyzed for wood extractives, particles and 2-(dimethylamino)ethan-1-01 and the following results were found (Table 3):

**Table 3:**

| | organic extraction liquid | purified organic extraction liquid | Washed organic extraction liquid |
|---|---|---|---|
| wood extractives [g L⁻¹] | 52.6 | 5.6 | 5.6 |
| particles [%w/w] | 0.49 | 0 | 0 |
| 2-(dimethylamino)ethan-1-ol [mg L⁻¹] | 0 | 35,000 | 23.0 |

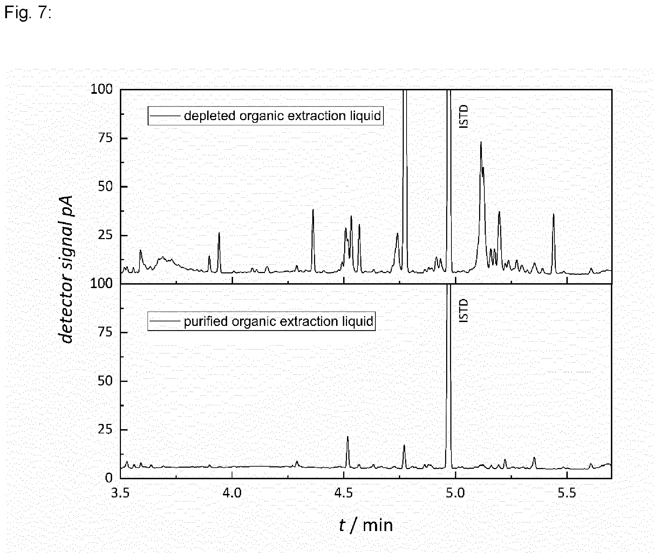

Fig. 7 shows gas chromatograms of the solutions of example 3.

Example 3 demonstrates that most of the wood extractives and by the additional washing step nearly all of the amine is removed from the organic extraction liquid.

### Example 4: Distillation of a 2-(dimethylamino)ethan-1-ol solution loaded with palmitic acid

a) To 99.8 g of a 357 g L⁻¹ aqueous solution of 2-(dimethylamino)ethan-1-ol were added 3.0 g of palmitic acid. The resulting solution was charged to a 250 mL round bottom flask connected to a condenser equipped with a thermometer and a receiving flask. The loaded amine solution was heated with a hotplate via a silicone oil bath and the distillation was done under reduced pressure. Several distillate fractions were collected and analyzed for 2-(dimethylamino)ethan-1-ol and palmitic acid. The distillation sump remained liquid throughout the whole distillation but solidified upon cooling. Only 0.3%w/w of 2-(dimethylamino)ethan-1-ol remained in the distillation residue. The following compositions of the different fractions were found (Table 4):

**Table 4:**

| Fraction | T(oilbath) | P | distillate | 2-(dimethylamino) ethan-1-ol | palmitic acid |
|---|---|---|---|---|---|
| | [°C] | [mbar] | [g] | [g L⁻¹] | [mg L⁻¹] |
| 1 | 0-115 | 800 | 14.8 | 184 | 0 |
| 2 | 115 | 800 | 7.3 | 186 | 0 |
| 3 | 120 | 800 | 13.9 | 202 | 0 |
| 4 | 120 | 800 | 12.9 | 219 | 0 |
| 5 | 120 | 800 | 14.8 | 228 | 0 |
| 6 | 120 | 800 | 9.6 | 255 | 0 |
| 7 | 120-140 | 800 | 7.0 | 270 | 0 |
| 8 | 140-170 | 800 | 16.5 | 857 | 0 |
| 9 | 170 | 800-73 | 1.1 | 851 | 0 |
| residue | | | 3.7 | 10.8%w/w | 81.1%w/w |

Example 4 shows that by the distillation in principle palmitic acid successfully can be removed from the amine in a model system.

### Example 5: Distillation of a loaded amine phase

a) A depleted organic extraction liquid obtained from a commercial biorefinery consisting of 52.6%w/w undecane and 32.4%w/w trioctylphosphine oxide was analyzed for solid particles (by gravimetry) and wood extractives (by GC) and found to contain 0.49%w/w solid particles and 52.6 g L⁻¹ wood extractives.
b) 101 g of this liquid were stirred with 101 g of an aqueous solution of 357 g L⁻¹ 2-(dimethylamino)ethan-1-ol at 60 °C and 200 rpm in a double walled glass apparatus. After 15 minutes the stirring was stopped and the phases were allowed to separate. The organic phase was discarded and 105 g of the loaded amine phase were charged to a 250 mL round bottom flask.
c) The flask was connected to a condenser equipped with a thermometer and a receiving flask and was heated with a hotplate via a silicone oil bath. The distillation was done under reduced pressure and several distillate fractions were collected and analyzed for 2-(dimethylamino)ethan-1-ol and palmitic acid. Finally the pressure was reduced down to 25mbar. The distillation sump remained liquid throughout the whole distillation and 76%w/w of 2-(dimethylamino)ethan-1-ol were recovered in the distillate. The following compositions of the different fractions were found (Table 5):

**Table 5:**

| Fraction | T(oilbath) | P | distillate | 2-(dimethylamino) ethan-1-ol | palmitic acid |
|---|---|---|---|---|---|
| | [°C] | [mbar] | [g] | [g L⁻¹] | [g L⁻¹] |
| 1 | 0-110 | 800 | 7.6 | 180 | 0 |
| 2 | 110 | 800 | 10.6 | 183 | 0 |
| 3 | 110 | 800 | 13.3 | 189 | 0 |
| 4 | 110 | 800 | 11.6 | 204 | 0 |
| 5 | 110 | 800 | 10.8 | 241 | 0 |
| 6 | 110 | 800 | 15.8 | 252 | 0 |
| 7 | 110-150 | 800 | 11.4 | 620 | 0 |
| 8 | 150-170 | 25-700 | 6.6 | 828 | 0 |
| residue | | | 13.3 | 161 | 214 |

Example 5 demonstrates that by the distillation the unwanted residues in a commercially relevant solution successfully can be removed from the amine.

### Example 6: Precipitation of impurities from the loaded amine phase using H₂SO₄

a) A depleted organic extraction liquid obtained from a commercial biorefinery consisting of 52.6%w/w undecane and 32.4%w/w trioctylphosphine oxide was analyzed for solid particles (by gravimetry) and wood extractives (by GC) and found to contain 0.49%w/w solid particles and 52.6 g L⁻¹ wood extractives.
b) 100 g of this liquid were stirred with 100 g of an aqueous solution of 357 g L⁻¹ 2-(dimethylamino)ethan-1-ol at 60 °C and 200 rpm in a double walled glass apparatus. After 15 minutes, the stirring was stopped and the phases were allowed to separate.
c) Certain amounts of the loaded amine phase were titrated with 0.25 M sulfuric acid to reach a certain pH value. The formed solids were filtered, dried at 40 °C and 200 mbar and weighted. The results of the precipitations are given in the following table (Table 6):

**Table 6:**

| Loaded amine phase [mL] | 0.25 M H₂SO₄ [mL] | pH | Precipitated impurities |
|---|---|---|---|
| | | | [g L⁻¹] |
| 10 | 7.59 | 10.0 | 5.3 |
| 5 | 24.16 | 9.0 | 9.6 |
| 5 | 29.25 | 8.0 | 7.9 |
| 4 | 25.44 | 7.0 | 18.8 |
| 4 | 25.94 | 4.0 | 50.8 |
| 4 | 29.47 | 2.0 | 65.4 |

Example 6 demonstrates that by adding acid the wood extractives can be removed by precipitation. At pH 2.0 other, presently unidentified compounds precipitated, too.

## Claims

1. A method for the purification of a depleted organic extraction liquid from a production process, said method comprising the following steps in the given sequence:
a. Intensively mixing the depleted organic extraction liquid with an amine-containing liquid in a first liquid-liquid extraction step,
b. Phase separation of the two liquids of step a.,
c. Washing of the organic extraction liquid phase of step b. with an aqueous liquid in a second liquid-liquid extraction step,
d. Phase separation of the two liquids of step c.,
e. Recycling of the purified organic extraction liquid into the production process,
wherein the enriched amine-containing phase of step b. and the enriched aqueous phase of step d. are purified and recycled into steps a. resp. step c..

2. A method according to claim 1, wherein the purification of the enriched amine-containing phase of step b. and the enriched aqueous phase of step d. is done by combining both phases and subjecting them to a fractionated distillation and the residue of the fractionated distillation is removed separately.

3. A method according to claim 2, wherein the distillation is a 2-stage distillation consisting of a conventional distillation column for the first stage and an evaporator for the second stage, wherein the sump of the first stage is further distilled in order to increase the amine recovery.

4. A method according to claim 2, wherein the distillation is a 1-stage distillation consisting of a conventional distillation column and the sump of the distillation stage is removed, the residues in the sump are coagulated by adding an acid and separated mechanically and the remaining liquid is deprotonated, in particular by adding calcium hydroxide, and recycled into the extraction process.

5. A method according to claim 2, wherein the distillation is a 1-stage distillation consisting of a conventional distillation column and the sump of the distillation stage is treated with salts of earth alkali metals to precipitate fatty acids and humin particles.

6. A method according to claim 1, wherein the amine-containing liquid contains one or more alkanolamines of the group containing 2-(Dimethylamino)ethan-1-ol *[DMAE]* and N-Methyldiethanolamine.

7. A method according to claim 1, wherein the liquid-liquid extraction steps of step a. and/or step c. are continuous extraction steps.

8. A method according to claim 1, wherein the steps a. to e. are performed at a temperature of between 50 and 100°C, preferably between 55 and 90°C.

9. A method according to claim 1, wherein the production process is a process for obtaining by-products from a biomaterial.

10. A method according to claim 9, wherein the biomaterial is wood.

11. A method according to claim 9, wherein the production process contains a vapor condensate extraction stage and the organic extraction liquid was used to extract the by-products from the vapor condensate and was subjected to a stripping step to deplete the by-products before being subjected to the purification method.

12. A method according to claim 1, wherein between step d. and step e. a second washing of the organic extraction liquid phase of step d. with an aqueous liquid in a third liquid-liquid extraction step and subsequently a phase separation of the two liquids of this second washing step are performed.
